# EUROPÄISCHE PATENTSCHRIFT

(11) **EP 0 581 821 B1**
(45) Veröffentlichungstag und Bekanntmachung des Hinweises auf die Patenterteilung: **22.11.1995**
(21) Anmeldenummer: 92909026.4
(22) Anmeldetag: 22.04.1992
(51) Int. Cl.: F16P 3/12

(54) **SICHERHEITSSCHALTUNG IN ELEKTRISCH BETRIEBENEN GERÄTEN**
SAFETY CIRCUIT IN ELECTRICALLY OPERATED DEVICES
CIRCUIT DE SECURITE DANS DES APPAREILS ACTIONNES ELECTRIQUEMENT

(30) Priorität: 25.04.1991 DE 4113487
(43) Veröffentlichungstag der Anmeldung: 09.02.1994
(73) Patentinhaber: Pi-Patente Gesellschaft mit beschränkter Haftung (GmbH) Entwicklung und Verwertung, 35435 Wettenberg (DE)
(72) Erfinder: MEIXNER, Hans-Werner, D-6301 Wettenberg (DE); VOIT, Alexander, D-6300 Giessen (DE)
(74) Vertreter: Knefel, Siegfried, Dipl.-Math.
(86) Internationale Anmeldenummer: EP9200897
(87) Internationale Veröffentlichungsnummer: WO9219905

(56) Entgegenhaltungen:
- EP-A- 0 052 185
- DE-A- 3 715 497
- FR-A- 2 613 270
- GB-A- 2 199 962
- US-A- 3 651 391
- US-A- 4 794 273

## Beschreibung

Die Erfindung betrifft eine Sicherheitsschaltung in elektrisch betriebenen Geräten, bei der zur Freigabe des Stromflusses mehrere zusammenwirkende Schaltglieder vorgesehen sind. Diese Schaltungen dienen dazu, bei elektrisch betriebenen Geräten eine Verletzungsgefahr für die Benutzer oder eine Gefahr als solche auszuschließen, wenn die Geräte unsachgemäß gehandhabt werden.

In der Regel wird bei derartigen Schaltungen der Arbeitsstrom oder zumindest ein Steuerstrom direkt geschaltet. Die Schalter selbst sind von mechanischer Bauart.

Diese bisher üblichen Konstruktionen weisen jedoch erhebliche Mängel auf:
a) Zum Einschalten ist lediglich das Drücken eines oder mehrerer Schalter notwendig. Wenn der Benutzer will, und dies wird in der Praxis oft getan, kann er die Funktion wenigstens eines Schalters durch einfaches Festkleben mit Isolierband bewerkstelligen.
b) Wenn es sich um größere Sicherheitseinrichtungen handelt, wird des öfteren in der Praxis eine zusätzliche "Brücke" von den Benutzern montiert. Handelt es sich um Magnetschalter, werden diese oft durch nachträglich montierte Dauermagnete außer Betrieb gesetzt.
c) Die verwendeten Spannungen liegen oft in einem für den Menschen gefährlichen Bereich.
d) Die Mechanik der Schalter und damit ihre Funktion ist anfällig gegen äußere Einwirkungen, wie Luftfeuchtigkeit, Korrosion und Verschmutzung.
e) Durch ihre Baugröße bedingt, sind die Schalter nicht immer optimal am Gerät zu plazieren.

Gemäß der US-PS 3,651,391 (Fig. 1 und 2) ist ein erster Sensorschalter als Ein- und Ausschalter vorgesehen, und ein zweiter Sensorschalter hält den Stromfluß aufrecht. Dieser zweite Schalter dient allein als Sicherheitsschalter.
Nachteilig bei dieser Ausbildung ist:
Ist der erste Schalter (Ein- und Ausschalter) eingeschaltet, kann durch versehentliche Berührung des zweiten Sensorschalters das Gerät ungewollt in Tätigkeit gesetzt werden. Es besteht dann Verletzungsgefahr für den Benutzer. Um diese Gefahr zu mindern, müßte wenigstens eine Warnanzeige in Verbindung mit dem ersten Ein- und Ausschalter vorgesehen sein. Damit weist diese Ausbildung nicht die erfindungsgemäß angestrebte Sicherheit auf und ist darüber hinaus aufwendig.

In einem zweiten Ausführungsbeispiel (Fig. 5 und 6) der US-PS 3,651,391 sind für die Bedienung des Gerätes zwei Hände (Körperteile) erforderlich, von denen eine Hand lediglich einen ersten Sensorschalter betätigt und die andere Hand lediglich einen zweiten Sensorschalter. In dieser Version wird lediglich das Vorhandensein der jeweiligen Hand, nicht jedoch ihre Positur festgelegt. Dies ist mit nur einem Sensorschalter je Körperteil nicht möglich. Diese Ausbildung ist deshalb auch nicht anwendbar auf ein nur mit einer Hand gehaltenes und betriebenes Gerät (Ein-Hand-Gerät).
Eine solche geplante Sicherheit wird häufig vom Bediener aus Gründen der Steigerung der Schnelligkeit des Arbeitsablaufes durch Kurzschließen eines der Schalter umgangen.

Gemäß der Erfindung soll ein solches Umgehen der Sicherheit nicht möglich sein. Gemäß der Erfindung muß bei dieser Version die Positur jedes das Gerät bedienenden Körperteiles vorbestimmt werden.

Gemäß einem dritten Ausführungsbeispiel (Fig. 7, 8 und 9) der US-PS 3,651,391 sind zwei Sensorschalter vorgesehen, die beide in Tätigkeit gesetzt werden müssen, um einen Stromfluß zu bewirken. Einer der Schalter ist zum Ein- und Ausschalten des Gerätes vorgesehen. Der zweite Schalter hält den Stromfluß so lange aufrecht, wie er berührt wird. Auch bei dieser Ausbildung kann der Fall auftreten, daß das Gerät bei eingeschaltetem ersten Schalter durch versehentliches Berühren des zweiten Schalters in Tätigkeit gesetzt wird. Auch hier wird keinesfalls die Positur des bedienenden Körperteiles erfaßt.

Aus der DE 37 16 623 C1 ist ein Neigungsschalter bekannt, der nur dann einen Strom fließen läßt, wenn er einen bestimmten Neigungswinkel erreicht. Ein solcher Neigungsschalter ist gemäß der Erfindung nur ein Hilfselement, welches einen der beiden gemäß der Erfindung vorgesehenen Sensortaster ersetzen kann.

Gemäß der DE-A 37 15 497 (D2) wird bei einem Bügeleisen zum Ein- und Ausschalten des Heizstromes ein Neigungsschalter und ein optischer Schalter verwendet. Der Neigungsschalter dient hier wiederum als Hilfselement. Der optische Schalter besteht aus einer im Griff des Bügeleisens vorgesehenen Lichtquelle, welche Licht durch ein Fenster im Griff des Bügeleisens nach außen abstrahlt. Erfaßt der Benutzer des Bügeleisens den Griff und deckt hierbei mit seiner Handfläche das Fenster ab, dann wirkt dieses Fenster als Spiegel, der das von der Lichtquelle kommende Licht auf eine Fotozelle reflektiert, die dann eine Schaltfunktion für die Aufheizung des Bügeleisens auslöst.

Ein solcher Schalter gibt nicht die erfindungsgemäß angestrebte Sicherheit gegen ungewolltes Einschalten des Gerätes. Ist das Bügeleisen zum Beispiel in seiner Bügelstellung angeordnet, dann wird auch in dieser Stellung ein Aufheizen der Bügelfläche bewirkt, wenn versehentlich das Fenster abgedeckt wird, zum Beispiel durch ein Stück Stoff oder dergleichen. Um zu vermeiden, daß der Schalter auch dann anspricht, wenn von außen her ein durch das Fenster im Griff des Bügeleisens fallendes Lichtbündel auf die Fotozelle trifft, müssen sehr aufwendige technische Maßnahmen getroffen werden, deren störungsfreie Funktion auf Dauer sehr zweifelhaft ist.
Auch läßt sich ein solcher Schalter leicht vom Benutzer überlisten, indem zum Beispiel das Fenster überklebt wird, so daß es ständig eine reflektierende Wirkung für die von der Lichtquelle im Griff des Bügeleisens ausgehenden Lichtstrahlen ausübt. Derartige Maßnahmen werden zum Beispiel deshalb durchgeführt, um die Sicherheitsschaltung des Bügeleisens auszuschalten, um ein ständig aufgeheiztes Bügeleisen zur Hand zu haben.
Nicht zuletzt kann der optische Schalter gemäß der DE-A 37 15 497 (D2) auch dadurch unbrauchbar werden, daß die Oberfläche des Fensters beim ständigen Gebrauch des Bügeleisens verletzt wird, sei es durch Kratzer, ausgelöst beispielsweise durch einen ständig auf das Fenster beim Bügeln einwirkenden Fingerring des Benutzers oder auch durch einen Sprung im Fenster, wodurch ungewollte Reflektionen des Lichtes am Fenster auftreten können, ohne daß die Hand des Benutzers auf dem Fenster aufliegt. Zwar strebt die Entgegenhaltung DE-A 37 15 497 (D2) an, solche Fehler auszuschließen. Es hat sich aber in der Praxis gezeigt, daß dies nicht gelingt.

Mit anderen Worten, der Schalter nach der DE-A 37 15 497 gibt nicht die erfindungsgemäß angestrebte Sicherheit, denn der erfindungsgemäße Schalter soll nicht ungewollt einen Schalteffekt auslösen und auch nicht überlistbar sein.

Berührungselemente (Sensortaster) als Schaltelement sind grundsätzlich aus der DE 27 53 314 C2 bekannt. In dieser Schrift wird die Funktion eines Sensorschalters erläutert. Gemäß der Erfindung wird ein solcher Sensorschalter, wenn notwendig dahingehend verbessert, daß er in Feuchträumen einsetzbar ist. Dies wird dadurch erreicht, daß eine galvanische Trennung in die Schaltelektronik eingebracht wird. In der DE 27 53 314 C2 wird kein Hinweis auf die Verwendung eines solchen Schalters für Sicherheitsschaltungen, wie sie der Erfindung zugrunde liegen, gegeben.

Gemäß der DE 26 27 663 C2 sind als Schaltelemente Metallfolien vorgesehen, welche folgendermaßen wirken: Die am Gerät außen anliegende Metallfolie wird von einem Menschen berührt und dadurch ihre Masse geändert, das heißt vergrößert. Dadurch tritt eine Kapazitätsänderung des Betätigungsgliedes, welches aus den gesamten zwei Metallfolien gebildet wird, auf. Hierdurch wird der Schaltvorgang ausgelöst. Die zweite Metallfolie liegt dabei innen und wird von dem Menschen nicht berührt. Auch diese Schrift befaßt sich nicht mit der Lösung von Sicherheitsfragen, die sich auf den Betrieb eines Gerätes beziehen.

Aufgabe der Erfindung ist es, eine Sicherheitsschaltung anzugeben, durch die ein elektrisch betriebenes Gerät nur dann Betriebsstrom erhält, wenn ein vorbestimmter, gefahrloser Betriebszustand garantiert ist, und diesen Zustand zu erzeugen.

Diese Aufgabe steht im Gegensatz zu den bisher üblichen Forderungen, auch nach der Sicherheitsforderung gemäß der US-PS 3,651,391, nach der der vorhandene Stromfluß dann unterbrochen werden soll, wenn das Gerät nicht mehr gefahrlos gehandhabt werden kann.

Gemäß der Erfindung wird deshalb vorausbestimmt, was gefahrlos und damit als sachgerechte Handhabung anzusehen ist. Die Gefahrlosigkeit wird durch die beiden Maßnahmen "Position" und/oder "Positur" des Gerätes und/oder des bedienenden Körperteiles ermittelt, und es wird hiervon die Schaltung über die normal üblichen Schaltungsmaßnahmen hinaus abhängig gemacht.

Unter "Position" wird im folgenden die Stellung, der Ort, die Lage des Gerätes verstanden. Unter "Positur" wird die Haltung/Stellung des bedienenden Körperteiles des Benutzers des Gerätes verstanden.

Der Vorteil der Erfindung wird deshalb also hauptsächlich darin gesehen, daß das Gerät nur dann Strom erhält, wenn es sich in einem zwingend vorgeschriebenen gefahrlosen Zustand befindet (Position) und/oder wenn die das Gerät bedienende Hand (Körperteil) sich in der richtigen Positur hierfür befindet.

Diese Aufgabe wird durch die Ansprüche 1 oder 2 gelöst.

Um die erfindungsgemäße Aufgabe zu lösen, mußten folgende Erfordernisse kombiniert werden:
1. Hohe Sicherheit für den Betreiber und die sonstige Umgebung, mit den Fragen:
   a) Wann wird ein-, wann wird ausgeschaltet?
   b) Welche Spannung wird verwendet?
2. Der Schalter darf nicht leicht manipulierbar sein (brücken, festkleben usw.), um zum Beispiel zu schnelleren Arbeitsabläufen zu kommen.
3. Der Schalter muß gegen äußere Einflüsse weitgehendst unempfindlich sein.
4. Der Schalter muß gut zu fertigen und in Geräten verwendbar sein.

Der Grundgedanke der Erfindung ist also der, ein Gerät - nicht wie bisher üblich - bei Fehlfunktion, das heißt einer Gefahr abzuschalten, sondern ein Einschalten nur bei vollkommen sachgerechter Bedienung zu ermöglichen und damit allen möglichen Fehlfunktionen und Gefahrenmomenten entgegenzuwirken.

Dies wird gemäß der Erfindung dadurch erreicht, daß zum Auslösen des Sicherheitsschalters, nicht wie bisher üblich, nur eine Gegebenheit (Schaltknopf drücken) zum Auslösen des Schalters ausreicht, sondern mehrere Voraussetzungen gleichzeitig und/oder in zeitlicher Abfolge erfüllt sein müssen. Mit Bezug auf die US-PS 3,651,391, Ausführungsbeispiel nach den Fig. 5 und 6, bedeutet dies: Nach der Erfindung müßten zwei Sensorschalter für jeden Körperteil vorgesehen sein, hier also insgesamt vier.

### Zu Ziffer 1a):

Erste Voraussetzung:
Der Kontakt mit der menschlichen Haut bzw. mit dem Erdpotential entspricht dem Drücken des bekannten mechanischen Sicherheitsschalters.

Zweite Voraussetzung:
Die Position wird als weiterer Sicherheitsfaktor eingeführt. Die Positur des berührenden Körperteiles des Menschen zum Gerät und/oder die Position des Gerätes selbst.
Zum Beispiel die Position von mindestens zwei Berührungselementen (Sensortastern), die jeweils so angeordnet sein müssen, daß sie vom Körperteil nur erreicht werden können, wenn die Hand eines Menschen eine vorbestimmte Positur am Gerät einnimmt und wenn erforderlich, auch eine vorbestimmte Druckfestigkeit ausübt. Diese kann durch die Empfindlichkeit der Kontaktplatte des Sensorschalters und der Steuerelektronik vorausbestimmt werden.

### Zu Ziffer 1b):

Die Steuerspannung sollte vollkommen ungefährlich sein. Dies wird gemäß der Erfindung erreicht, weil das Erdpotential als Steuerimpuls dient, die Schaltung also stromlos arbeitet.

### Zu Ziffer 2:

Der Sensorschalter kann weder elektrisch gebrückt, noch mechanisch festgestellt werden.

### Zu Ziffer 3:

Die Sensorsicherheitsschaltung ist gegen äußere Einflüsse weitgehendst unempfindlich, da die Steuerelektronik in Kunststoff gekapselt sein kann und die einfachen Kontaktflächen kaum Angriffsmöglichkeiten bieten und auch keine Mechanik enthalten.

### Zu Ziffer 4:

Die Produktion ist ohne weiteres möglich, da es sich um die neue Kombination bekannter Teile, in bestimmter Anordnung, mit neuer Aufgabe und verblüffender Wirkung handelt. Vom Einbau her läßt diese neue Sensor-Sicherheitsschaltung dem Produzenten eines Gerätes mehr Möglichkeiten als bei den bisherigen mechanischen Sicherheitsschaltern. Insbesondere läßt sich der Schalter gemäß der Erfindung wesentlich billiger herstellen als zum Beispiel der optische Schalter gemäß der DE 37 15 497 A1.

Weitere Einzelheiten der Erfindung können den Unteransprüchen entnommen werden.

Auf der Zeichnung sind Ausführungsbeispiele der Erfindung dargestellt, und zwar zeigen:
- Fig. 1: eine Bohrmaschine;
- Fig. 2: einen elektrischen Gewindeschneider;
- Fig. 3: ein Bügeleisen;
- Fig. 4: das Schaltschema für die Bohrmaschine nach Fig. 1;
- Fig. 5: das Schaltschema für den Gewindeschneider nach Fig. 2;
- Fig. 6: das Schaltschema für das Bügeleisen gemäß Fig. 3.

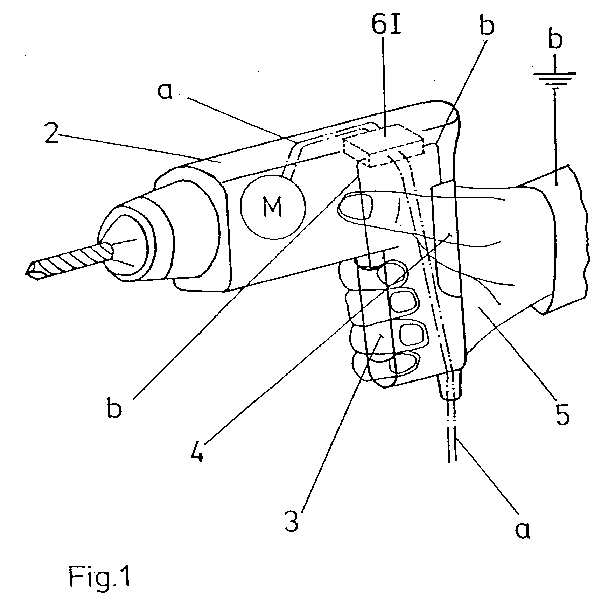

Gemäß Fig. 1 ist die Bohrmaschine mit der Bezugszahl (2) bezeichnet. Die die Bohrmaschine haltende menschliche Hand (5) bringt das ihr eigene Erdpotential (b) auf die Kontaktplatten (3, 4) (Sensorplatten) eines Berührungsschalters. Diese steuern die Steuerelektronik (6, I) derart an, daß der Betriebsstrom (a) auf den Antriebsmotor (M) durchgeschaltet wird. Die zwei elektrisch leitenden Kontaktplatten (3, 4) sind gegeneinander und gegen das Gerät isoliert und so in den Griff der Bohrmaschine (2) eingesetzt, daß ein Mensch sie nur dann beide berührt, wenn er die Bohrmaschine (2) vollkommen korrekt in einer Hand - oder wenn beabsichtigt - in beiden Händen hält.

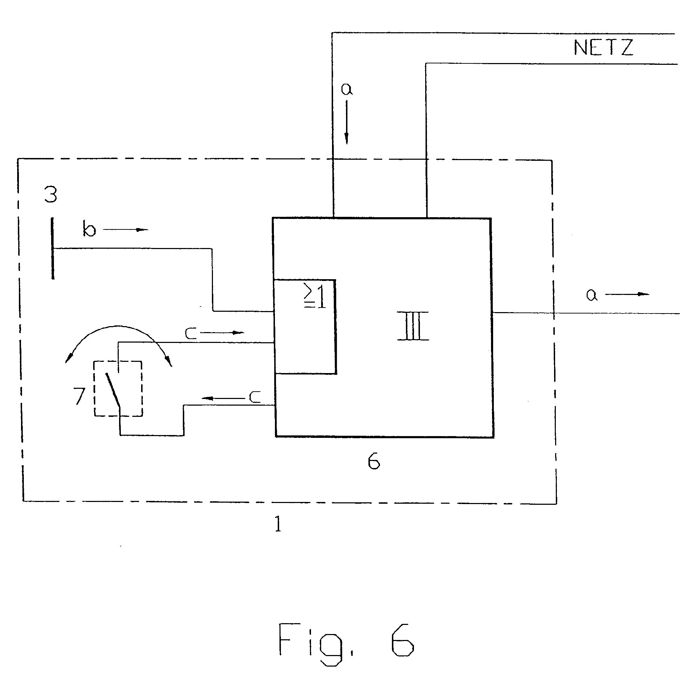

Das dem Menschen eigene Erdpotential (b) des Elektrizitätswerkes wird durch die Berührung auf die Kontaktplatten (3, 4) gebracht. Eine Steuerelektronik (6) schaltet den Betriebsstrom für die Bohrmaschine nur dann durch, wenn beide Erdpotentiale (b), jedes für sich, anliegen. Die dafür notwendige Schaltung ist in Fig. 4 dargestellt. Wenn es sinnvoll erscheint, kann auch die Intensität der beiden Erdpotentiale (b) als Schaltkriterium ausgenutzt werden, denn die Intensität des Erdpotentiales (b) steigt automatisch, je fester der Benutzer die Bohrmaschine hält.

Sollte die Hand/Hände (5) die vorgesehene Positur verlassen oder zu locker halten, schaltet das Gerät sofort ab.

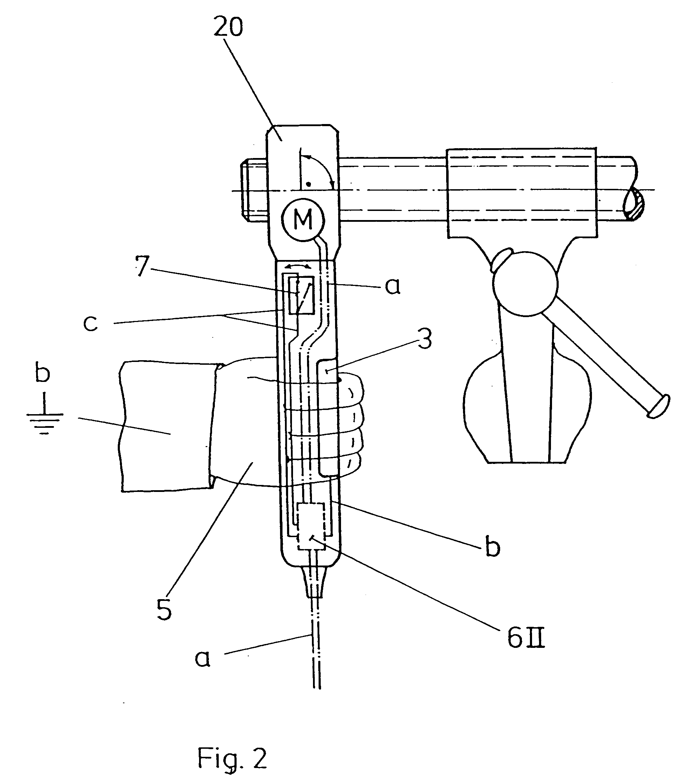

Gemäß den Fig. 2 und 7 ist ein elektrischer Gewindeschneider (20) dargestellt. Die menschliche Hand (5) bringt das ihr eigene Erdpotential (b) auf die Kontaktplatte (3). Diese steuert die Steuerelektronik (6, II) an. Der Lageschalter (7) schaltet ein weiteres Steuersignal (c) auf die Steuerelektronik (6, II), wenn er sich in der vorgegebenen richtigen Lage befindet. Wenn beide Steuerimpulse (b und c) anliegen, wird der Betriebsstrom (a) von der Steuerelektronik (6, II) zum Antriebsmotor (M) durchgeschaltet.

Dieser elektrische Gewindeschneider darf nicht über ein gewisses Maß gekippt werden. Das Berührungselement (3) ist gegen das Gerät isoliert so eingesetzt, daß ein Mensch es bei ordnungsgemäßem Bedienen berührt. Das ihm eigene Erdpotential (b) wird dadurch auf die Kontaktplatte gebracht. Diese leitet es weiter zur Steuerelektronik (6).

Ein weiterer Schalter (7), dessen Schaltzustand von seiner Lage, vertikal oder horizontal, abhängig ist, leitet bei richtiger Position des elektrischen Gewindeschneiders einen Impuls (c) auf die Steuerelektronik (6). Wenn beide Impulse anliegen, schaltet die Steuerelektronik (6) den Betriebsstrom (a) durch.

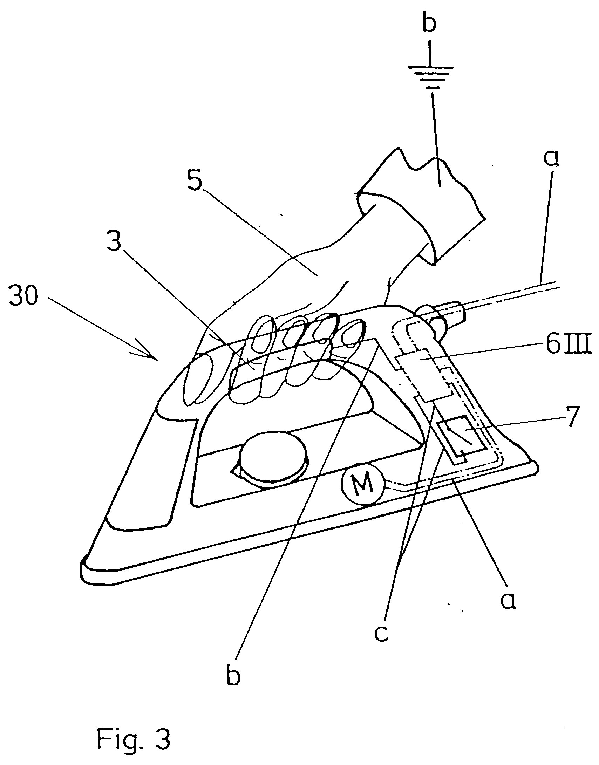

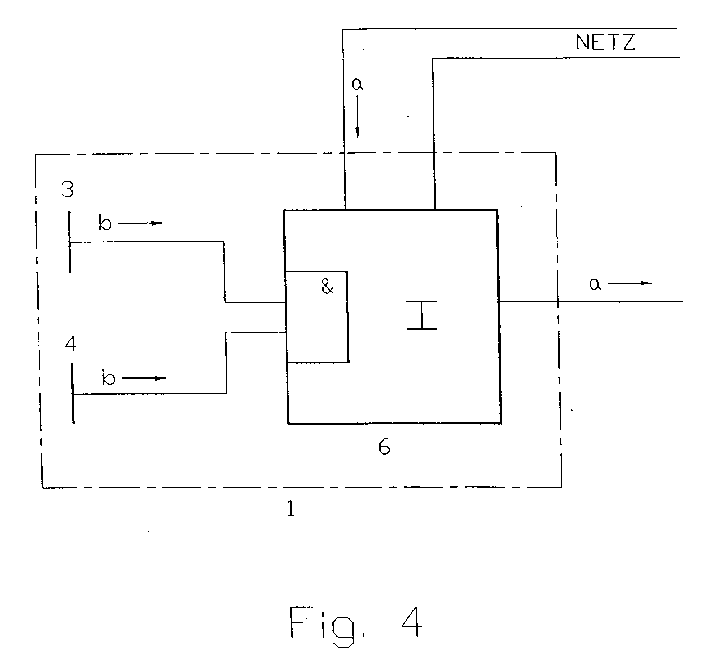

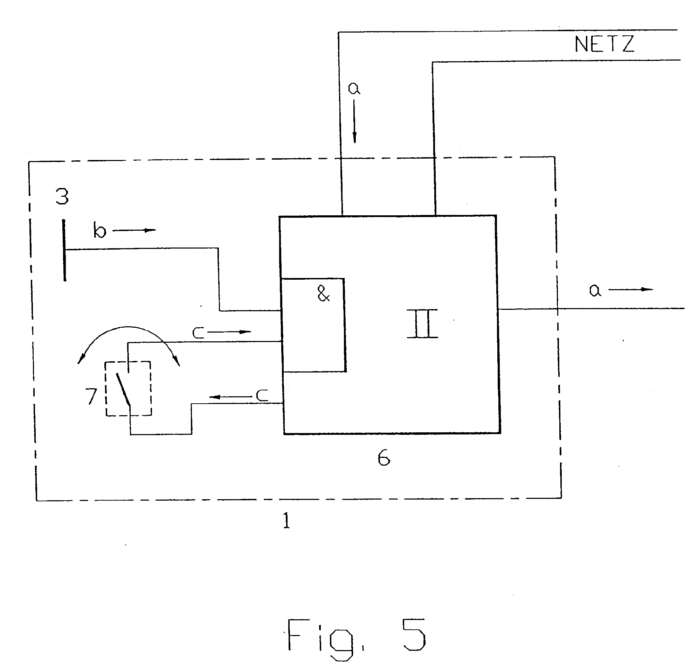

Gemäß den Fig. 3 und 6 ist ein elektrisch betriebenes Bügeleisen (30) vorgesehen, das eine Kontaktplatte (3) gegen das Gerät isoliert so eingebaut hat, daß sie ein Mensch bei ordnungsgemäßer Benutzung des Bügeleisens mit seiner Hand (5) berührt. Das dem Menschen eigene Erdpotential wird dadurch auf die Kontaktplatte (3) übertragen. Diese leitet es zur Steuerelektronik (6, III).

Ein weiterer Schalter (7), dessen Schaltzustand von seiner Lage, vertikal oder horizontal, abhängig ist, leitet nur bei senkrechter Positur des Bügeleisens einen Impuls (c) auf die Steuerelektronik (6, III). Diese schaltet den Betriebsstrom (a) nur durch, wenn wenigstens einer der beiden Impulse (b oder c) anliegt. Das heißt: das Bügeleisen wird in der Hand gehalten oder ist korrekt senkrecht abgestellt.

Bei diesem Beispiel ist der Grundgedanke der Erfindung: "einschalten, wenn korrekte Bedienung" besonders gut erkenntlich. Alle möglichen Fehlfunktionen werden dadurch ausgeschlossen. Nur ist es hier eben der besondere Fall, daß die korrekte Bedienung nicht unbedingt auf einen Moment und Zustand beschränkt sein muß, sondern auch zeitlich nacheinander und unterschiedlich erfolgen kann.

Bei dem Ausführungsbeispiel nach Fig. 3 bringt die dargestellte menschliche Hand (5) das ihr eigene Erdpotential (b) auf die Kontaktplatte (3). Diese steuert die Steuerelektonik (6, III) an. Der Lageschalter (7) schaltet ein weiteres Steuersignal (c) auf die Steuerelektronik (6, III), wenn das Bügeleisen ordnungsgemäß senkrecht abgestellt wird. Die Steuerelektronik (6, III) schaltet den Betriebsstrom (a) zur Heizplatte des Bügeleisens durch, wenn wenigstens ein Steuerimpuls (c oder b) anliegt.

Die Vorteile der erfindungsgemäßen Schaltung werden in folgenden Merkmalen gesehen:
a) Ein sehr hohes Maß an Sicherheit. Das Gerät schaltet nur bei sachgerechter und korrekter Bedienung ein und schaltet bei Gefahr sofort aus.
b) Es liegt kein Potential auf den Kontaktplatten.
c) Die Kontaktplatten sind nicht brückbar oder als Schalter feststellbar.
d) Die Schaltung ist funktionssicher, da eine äußere Beeinflussung nicht möglich ist.
e) Die Schaltung ist verschleißfrei.
f) Die Schaltung kann funkenlos ausgebildet werden.
g) Die Schaltung ist bewegungslos. Es ist für die Betätigung der Schalter keine Mechanik erforderlich.
h) Die Kontaktplatten können glatt mit der Oberfläche, beispielsweise eines Griffes des Gerätes abschließen.
i) Es ist ein gutes Handling möglich.

Um zu der Erfindung zu kommen, waren vom Stand der Technik folgende Schritte erforderlich:
a) Generell war es notwendig, davon wegzukommen, daß man elektrisch betriebene Geräte im Gefahrenmoment ausschaltet, sondern besser diese Geräte nur bei vollkommen gefahrloser, korrekter Bedienung einschaltet und damit alle möglichen Gefahren ausschließt.
b) Im weiteren war es notwendig, die Positur des Rörperteiles des Menschen zum Gerät, welches das Gerät bedient, und/oder die Position des Gerätes selbst als bestimmenden Sicherheitsfaktor mit einzubringen.
c) Letztendlich waren noch folgende Schritte erforderlich:
   I. Man mußte weg von der Mechanik zum bewegungslosen Sensorschalter.
   II. Man schaltet nicht einen Strom durch, sondern legt das Erdpotential an.

Wie durch die Ansprüche 1 und 2 deutlich wird, bezieht sich die vorliegende Erfindung nicht nur auf Sensorschalter, welche mit einem Erdpotential arbeiten (siehe Anspruch 5). Diese Arbeitsweise ist lediglich eine vorteilhafte Ausgestaltung. Es ist selbstverständlich, daß auch andere Sensorschalter, zum Beispiel nach dem Stand der Technik kapazitiv arbeitende Schalter verwendet werden können. Vergleiche hierzu die DE 26 27 663 C 2.

Die Schaltungen gemäß den Fig. 2, 4 und 6 arbeiten mit demselben Erfolg auch mit anderen Sensoren mit Bezug auf die ihnen zugeordneten Geräte, zum Beispiel kapazitiv.

### Bezugszahlen

- 1: Sensor-Sicherheitsschalter
- 2: Bohrmaschine
- 3: Kontaktplatte
- 4: Kontaktplatte
- 5: menschliche Hand
- 6: Steuerelektronik
I. Sensor und Sensor
II. Sensor und Lageschalter
III. Sensor oder Lageschalter
- 7: Lageschalter
- 20: elektrischer Gewindeschneider
- 30: Bügeleisen
- M: Motor
- a: Betriebsstrom
- b: Erdpotential
- c: Steuerimpuls

## Patentansprüche

1. Sicherheitsschaltung in elektrisch betriebenen Geräten, bei der zur Freigabe des Stromflusses mehrere zusammenwirkende Schaltglieder vorgesehen sind, **dadurch gekennzeichnet**, daß wenigstens zwei Schaltglieder für jeden eine Funktion der Schaltglieder auslösenden Körperteil, z.B. menschliche Hand (5), des Bedieners vorhanden sind, welche gegeneinander und gegen das Gerät, z.B. Bohrmaschine (2), isolierte elektronisch arbeitende Berührungselemente, z.B. Kontaktplatten (3, 4), Sensortaster, Sensorplatten, aufweisen, welche bei gemeinsamer Berührung einen Stromfluß freigeben, daß die Berührungselemente, z.B. Kontaktplatten (3, 4), am Griff oder dergleichen des Gerätes, z.B. Bohrmaschine (2), vorgesehen sind in einer Anordnung, derart, daß die Berührungselemente, z.B. Kontaktplatten (3, 4), Sensortaster, Sensorplatten, bei sachgerechter und korrekter Bedienung des Gerätes, z.B. Bohrmaschine (2), und nur bei sachgerechter und korrekter Positur des wenigstens einen menschlichen Körperteiles, z.B. menschliche Hand (5 ), des Bedieners am Gerät, z.B. Bohrmaschine (2), gleichzeitig berührt werden.

2. Sicherheitsschaltung in elektrisch betriebenen Geräten, bei der zur Freigabe des Stromflusses mehrere zusammenwirkende Schaltglieder vorgesehen sind, **dadurch gekennzeichnet,** daß wenigstens zwei Schaltglieder vorgesehen sind, von denen wenigstens eines ein gegen das Gerät (20, 30) isoliertes elektronisch arbeitendes Berührungselement, z.B. Kontaktplatte (3), Sensortaster, Sensorplatte, ist, welches bei Berührung in Verbindung mit dem zweiten Schaltglied einen Stromfluß freigibt, daß das Berührungselement, z.B. Kontaktplatte (3) am Griff oder dergleichen des Gerätes (20, 30) vorgesehen ist in einer Anordnung, derart, daß dieses Berührungselement, z.B. Kontaktplatte (3), Sensortaster, Sensorplatte, bei sachgerechter und korrekter Bedienung des Gerätes (20, 30) durch den menschlichen Bediener von wenigstens einem Körperteil, z.B. menschliche Hand (5), des Bedieners berührt werden muß und das weitere Schaltglied, z.B. Lageschalter (7), auf die Anordnung des Gerätes (20, 30) in seiner Arbeitsposition anspricht.

3. Sicherheitsschaltung nach Anspruch 2, dadurch gekennzeichnet, daß die Schaltglieder, z.B. Kontaktplatte (3), Lageschalter (7), in einer Und- oder Oderschaltung angeordnet sind.

4. Sicherheitsschaltung nach Anspruch 1 oder 2, dadurch gekennzeichnet, daß die Schaltglieder zeitlich versetzt zueinander ansprechen.

5. Sicherheitsschaltung nach Anspruch 1 oder 2, dadurch gekennzeichnet, daß die Berührungselemente, z.B. Kontaktplatten (3, 4), Sensortaster, Sensorplatten, auf das Erdpotential ansprechen.

6. Sicherheitsschaltung nach Anspruch 1 oder 2, dadurch gekennzeichnet, daß das Erdpotential mindestens einmal durch korrektes und sachgerechtes Bedienen des Gerätes (2, 20, 30) durch den Benutzer übertragen wird, um ein Auslösen der Arbeitsspannung zu bewerkstelligen.

7. Sicherheitsschaltung nach Anspruch 1, dadurch gekennzeichnet, daß eine erdpotentialfreie aber elektrisch leitende Verbindung der Berührungselemente, z.B. Kontaktplatten (3, 4), Sensortaster, Sensorplatten, der Schaltglieder untereinander keine Auslösung der Steuerelektronik (6) bewirkt.

8. Sicherheitsschaltung nach Anspruch 1 oder 2, gekennzeichnet durch die Anordnung der Berührungselemente Kontaktplatten (3, 4), z.B. Sensortaster, Sensorplatten, derart, daß diese beim Ablegen des Arbeitsgerätes (2, 20, 30) erdpotentialfrei bleiben.

9. Sicherheitsschaltung nach Anspruch 1 oder 2, dadurch gekennzeichnet, daß die Berührungselemente, z.B. Kontaktplatten (3, 4), z.B. Sensortaster, Sensorplatten, auf die Berührungsintensität durch den menschlichen Körperteil, z.B. menschliche Hand (5), des Bedieners abgestimmt sind.

10. Sicherheitsschaltung nach Anspruch 1 oder 2, dadurch gekennzeichnet, daß die Arbeitsspannung bei falscher Handhabung des Gerätes (2, 20, 30) sofort abgeschaltet wird.

11. Sicherheitsschaltung nach Anspruch 1 oder 2, dadurch gekennzeichnet, daß die Schaltglieder, z.B. Kontaktplatten (3, 4), z.B. Lageschalter (7), mit weiteren Schaltgliedern zusammenarbeiten.

12. Sicherheitsschaltung nach Anspruch 1 oder 2, dadurch gekennzeichnet, daß mehrere Schaltungen, z.B. Steuerelektroniken (I, II, III), kombiniert sind.

13. Sicherheitsschaltung nach Anspruch 1 oder 2, gekennzeichnet durch fast verschleißfreie Bauelemente.

14. Sicherheitsschaltung nach Anspruch 1 oder 2, gekennzeichnet durch funkenfreie Schaltelemente.

15. Sicherheitsschaltung nach Anspruch 1 oder 2, dadurch gekennzeichnet, daß die Berührungselemente, z.B. Kontaktplatten (3, 4), Sensortaster, Sensorplatten, im Bereich des Griffes eines bewegbaren Arbeitsgerätes (2, 20, 30) angeordnet sind.

16. Sicherheitsschaltung nach Anspruch 1 oder 2, dadurch gekennzeichnet, daß die Berührungselemente, z.B. Kontaktplatten (3, 4), Sensortaster, Sensorplatten, unbeweglich angeordnet sind.

17. Sicherheitsschaltung nach Anspruch 16, dadurch gekennzeichnet, daß die Berührungselemente, z.B. Kontaktplatten (3, 4), Sensortaster, Sensorplatten, in der Oberfläche des Gerätes (2, 20, 30) oder Griffes angeordnet sind.

18. Sicherheitsschaltung nach Anspruch 1 oder 2, dadurch gekennzeichnet, daß die Berührungselemente, z.B. Kontaktplatten (3, 4), Sensortaster, Sensorplatten, glatt mit der Oberfläche des Gerätes (2, 20, 30), z.B. des Griffes, abschließen.

19. Sicherheitsschaltung nach Anspruch 1 oder 2, dadurch gekennzeichnet, daß die Berührungselemente, z.B. Kontaktplatten (3, 4), Sensortaster, Sensorplatten, wasserdicht in der Oberfläche des Griffes angeordnet sind.

20. Sicherheitsschaltung nach Anspruch 1 oder 2, gekennzeichnet durch die Verwendung bei einem beweglichen Arbeitsgerät (2, 20, 30).

## Claims

1. Safety circuit in electrically operated devices, with which several interacting contact elements are provided to release the current flow, **characterized in that** at least two contact elements are present for every one part of the body , e.g. human hand (5), of the operator triggering a function of the contact elements, which have electronically working contact elements, e.g. contact plates (3, 4), sensor keys, sensor plates, insulated against each other and against the device, e.g. drilling machine (2), which release a current flow on joint contact, that the contacting elements, e.g. contact plates (3, 4) are provided at the handle or such like of the device, e.g. drilling machine (2), in such a layout that the contacting elements, e.g. contact plates (3, 4), sensor keys, sensor plates, are touched simultaneously on proper and correct operation of the device, e.g. drilling machine (2), and only with the proper and correct posture of at least one part of the human body, e.g. human hand (5), of the operator at the device, e.g. drilling machine (2).

2. Safety circuit in electrically operated devices, with which several interacting contact elements are provided to release the current flow, **characterized in that** at least two contact elements are provided, at least one of which is an electronically working contacting element, e.g. contact plate (3), sensor key, sensor plate, insulated against the device (20, 30), which on contact in conjunction with the second contact element releases a current flow, that the contacting element, e.g. contact plate (3) is provided at the handle or such like of the device (20, 30) in such a layout that this contact element, e.g. contact plate (3), sensor key, sensor plate, has to be touched, on proper and correct operation of the device (20, 30) by the human operator, by at least one part of the body, e.g. human hand (5), of the operator and the further contact element, e.g. position switch (7) responds to the layout of the device (20, 30) in its working position.

3. Safety circuit according to claim 2, characterized in that the contact elements, e.g. contact plate (3), position switch (7), are arranged in an AND or OR circuit.

4. Safety circuit according to claim 1 or claim 2, characterized in that the contact elements respond with a temporal offset from one another.

5. Safety circuit according to claim 1 or claim 2, characterized in that the contacting elements, e.g. contact plates (3, 4), sensor keys, sensor plates, respond to the ground potential.

6. Safety circuit according to claim 1 or claim 2, characterized in that the ground potential is transmitted at least once through correct and proper operation of the device (2, 20, 30) by the user, in order to effect a triggering of the working voltage.

7. Safety circuit according to claim 1, characterized in that a ground-potential-free but electrically conductive connection of the contacting elements, e.g. contact plates (3, 4), sensor keys, sensor plates, of the contact elements among each other effects no triggering of the control electronics (6).

8. Safety circuit according to claim 1 or claim 2, characterized by the layout of the contacting elements, e.g. contact plates (3, 4), sensor keys, sensor plates, in such a way that they remain free of ground potential when the working device (2, 20, 30) is set down.

9. Safety circuit according to claim 1 or claim 2, characterized in that the contacting elements, e.g. contact plates (3, 4), sensor keys, sensor plates, are coordinated with the contacting intensity through the part of the human body, e.g. human hand (5), of the operator.

10. Safety circuit according to claim 1 or claim 2, characterized in that the working voltage is switched off immediately on incorrect handling of the device (2, 20, 30).

11. Safety circuit according to claim 1 or claim 2, characterized in that the contact elements, e.g. contact plates (3, 4), position switch (7), work together with further contact elements.

12. Safety circuit according to claim 1 or claim 2, characterized in that several circuits, e.g. control electronics (I, II, III) are combined.

13. Safety circuit according to claim 1 or claim 2, characterized by almost wear-free elements.

14. Safety circuit according to claim 1 or claim 2, characterized by non-sparking switching elements.

15. Safety circuit according to claim 1 or claim 2, characterized in that the contacting elements, e.g. contact plates (3, 4), sensor keys, sensor plates, are located in the area of the handle of a movable working device (2, 20, 30).

16. Safety circuit according to claim 1 or claim 2, characterized in that the contacting elements, e.g. contact plates (3, 4), sensor keys, sensor plates, are located immovably.

17. Safety circuit according to claim 16, characterized in that the contacting elements, e.g. contact plates (3, 4), sensor keys, sensor plates, are located in the surface of the device (2, 20, 30) or handle.

18. Safety circuit according to claim 1 or claim 2, characterized in that the contacting elements, e.g. contact plates (3, 4), sensor keys, sensor plates, finish flush with the surface of the device (2, 20, 30), e.g. of the handle.

19. Safety circuit according to claim 1 or claim 2, characterized in that the contacting elements, e.g. contact plates (3, 4), sensor keys, sensor plates, are located watertight in the surface of the handle.

20. Safety circuit according to claim 1 or claim 2, characterized by the use in a movable working device (2, 20, 30).

## Revendications

1. Circuit de sécurité dans des appareils actionnés électriquement, dans lequel plusieurs éléments de commutation agissant ensemble sont prévus pour la libération de la conduction de courant,
caractérisé en ce qu'il existe au moins deux éléments de commutation pour chaque partie corporelle de l'utilisateur, par exemple une main humaine (5), déclenchant une fonction des éléments de commutation lesquels présentent des éléments de contact, par exemple des plaques porte-contact (3, 4), des palpeurs capteurs, des plaques capteurs, fonctionnant électroniquement, isolés l'un par rapport à l'autre et par rapport à l'appareil, par exemple une perceuse (2), lesquels libèrent un courant de conduction lors d'un contact commun, en ce que les éléments de contact, par exemple des plaques porte-contact (3, 4), sont prévus à la poignée, ou analogue, de l'appareil, par exemple une perceuse (2), dans un agencement tel que ces éléments de contact, par exemple des plaques porte-contact (3, 4), des palpeurs capteurs, des plaques capteur, soient touchés simultanément lors d'une utilisation conforme et correcte de l'appareil, par exemple une perceuse (2), et seulement pour une posture conforme et correct d'au moins une partie du corps humain de l'utilisateur, par exemple une main humaine (5), sur l'appareil, par exemple une perceuse (2).

2. Circuit de sécurité dans des appareils actionnés électriquement, dans lequel plusieurs éiéments de commutation agissant ensemble sont prévus pour la libération de la conduction de courant,
caractérisé en ce qu'au moins deux éléments de commutation sont prévus, dont au moins un est un élément de contact, par exemple une plaque porte-contact (3), un palpeur capteur, une plaque capteur, fonctionnant électroniquement, isolé par rapport à l'appareil (20, 30), qui libère un courant de conduction lorsqu'on le touche en liaison avec le deuxième élément de commutation, en ce que l'élément de contact, par exemple une plaque porte-contact (3), est prévue à la poignée, ou analogue, de l'appareil (20, 30), dans un agencement tel que cet élément de contact, par exemple une plaque porte-contact (3), un palpeur capteur, une plaque capteur, doit, lors d'une utilisation conforme et correcte de l'appareil (20, 30) par l'utilisateur humain, être touché par au moins une partie du corps humain de l'utilisateur, par exemple une main humaine (5), et que l'autre élément de commutation, par exemple un commutateur de position (7) répond, dans sa position de travail, à l'agencement de l'appareil (20, 30).

3. Circuit de sécurité selon la revendication 2, caractérisé en ce que les éléments de commutation, par exemple une plaque porte-contact (3), un commutateur de position (7), sont agencés selon un circuit ET ou OU.

4. Circuit de sécurité selon la revendication 1 ou 2, caractérisé en ce que les éléments de commutation réagissent l'un par rapport à l'autre avec un déphasage de temps .

5. Circuit de sécurité selon la revendication 1 ou 2, caractérisé en ce que les éléments de contact, par exemple des plaques porte-contact (3, 4), des palpeurs capteurs, des plaques capteurs, réagissent au potentiel de terre.

6. Circuit de sécurité selon la revendication 1 ou 2, caractérisé en ce que le potentiel de terre est transmis au moins une fois, grâce à une utilisation correcte et conforme de l'appareil (2, 20, 30) par l'utilisateur, afin d'exécuter un déclenchement de la tension de régime.

7. Circuit de sécurité selon la revendication 1, caractérisé en ce qu'une liaison, sans potentiel de terre mais électro-conductrice, des éléments de contact, par exemple des plaques porte-contact (3, 4), des palpeurs capteurs, des plaques capteurs, des éléments de commutation ne produit entre eux aucun déclenchement du système électronique de commande (6).

8. Circuit de sécurité selon la revendication 1 ou 2, caractérisé en ce que l'agencemnt des éléments de contact, par exemple des plaques porte-contact (3, 4), des palpeurs capteurs, des plaques capteur, est tel que ceux-ci restent sans potentiel de terre lorsqu'on range l'appareil de travail (2, 20, 30).

9. Circuit de sécurité selon la revendication 1 ou 2, caractérisé en ce que les éléments de contact, par exemple des plaques porte-contact (3, 4), par exemple des palpeurs capteurs, des plaques capteur, sont adaptés à l'intensité du contact de la partie du corps humain de l'utilisateur, par exemple une main humaine (5).

10. Circuit de sécurité selon la revendication 1 ou 2, caractérisé en ce que la tension de régime est immédiatement coupée lors d'une mauvaise manipulation de l'appareil (2, 20, 30).

11. Circuit de sécurité selon la revendication 1 ou 2, caractérisé en ce que les éléments de commutation, par exemple des plaques porte-contact (3, 4), par exemple un commutateur de position (7), coopèrent avec d'autres éléments de commutation.

12. Circuit de sécurité selon la revendication 1 ou 2, caractérisé en ce que plusieurs circuits, par exemple des systèmes électroniques de commande (I, II, III) sont combinés.

13. Circuit de sécurité selon la revendication 1 ou 2, caractérisé par des composants presque sans usure.

14. Circuit de sécurité selon la revendication 1 ou 2, caractérisé par des éléments de commutation sans étincelles.

15. Circuit de sécurité selon la revendication 1 ou 2, caractérisé en ce que les éléments de contact, par exemple des plaques porte-contact (3, 4), des palpeurs capteurs, des plaques capteur, sont disposés dans la zone de la poignée d'un appareil de travail (2, 20, 30) mobile.

16. Circuit de sécurité selon la revendication 1 ou 2, caractérisé en ce que les éléments de contact, par exemple des plaques porte-contact (3, 4), des palpeurs capteurs, des plaques capteurs, sont agencés de manière fixe.

17. Circuit de sécurité selon la revendication 16, caractérisé en ce que les éléments de contact, par exemple des plaques porte-contact (3, 4), des palpeurs capteurs, des plaques capteurs, sont agencés dans la surface de l'appareil (2, 20, 30) ou de la poignée.

18. Circuit de sécurité selon la revendication 1 ou 2, caractérisé en ce que les éléments de contact, par exemple des plaques porte-contact (3, 4), des palpeurs capteurs, des plaques capteur, se terminent au niveau de la surface de l'appareil (2, 20, 30), par exemple de la poignée.

19. Circuit de sécurité selon la revendication 1 ou 2, caractérisé en ce que les éléments de contact, par exemple des plaques porte-contact (3, 4), des palpeurs capteurs, des plaques capteurs, sont agencés dans la surface de la poignée de manière étanche à l'eau.

20. Circuit de sécurité selon la revendication 1 ou 2, caractérisé par une utilisation avec un appareil de travail (2, 20, 30) mobile.
